# EUROPEAN PATENT SPECIFICATION

(11) **EP 1 625 069 B1**
(45) Date of publication and mention of the grant of the patent: **08.12.2010**
(21) Application number: 04728302.3
(22) Date of filing: 19.04.2004
(51) Int. Cl.: B63B 3/48, B63B 25/20

(54) **DEVICE AT CARDECK FOR VEHICLES ON SHIPS**
VORRICHTUNG FÜR FAHRZEUGLASTDECK AUF SCHIFFEN
DISPOSITIF POUR PONTS GARAGE DESTINES A DES VEHICULES SUR DES NAVIRES

(30) Priority: 16.05.2003 SE 0301430
(43) Date of publication of application: 15.02.2006
(73) Proprietor: TTS Ships Equipment AB, 411 04 Göteborg (SE)
(72) Inventor: SALEN, Hans, S-430 85 Brännö (SE)
(74) Representative: Cederbom, Hans Erik August
(86) International application number: PCT/SE2004/000595
(87) International publication number: WO 2005/000668

(56) References cited:
- GB-A- 1 205 862
- US-A- 3 990 383

## Description

The present invention relates to an arrangement for cargo decks for vehicles on ships comprising a multiplicity hoistable upper deck section and a multiplicity hoistable lower deck section, that they are so arranged as to be locked respectively in a position in which they are vertically moved apart and in a position in which they are vertically moved together by means of locking devices with the ability to be disengaged.

When vehicles are loaded on so-called Ro-Ro ships, use is also made of hoistable decks to enable vehicles and other cargo on subjacent fixed decks to be loaded without obstruction by superjacent decks in those cases in which the cargo is exceptionally tall, as there would otherwise not be space for it thereon, or if the load is exceptionally heavy so that only the fixed deck is capable of withstanding the aforementioned heavy load. If there are many low vehicles, which are nevertheless heavy in weight, it is then not possible to make effective use of the superjacent hoistable decks.

Closest poior art US 3,990,383 A shows a loading apparatus for a cargo vessel. Deck sections (16A) (46) are raised up towards an upper stationary deck section 18A. Movable deck sections (14A) (16A) (20A) which are resting on movable brackets (44) and are each suspended by wires (50) and hooked by hooks (48) are lowered or raised up by winches (52). Each deck is only supported in a single manner and none of the decks work together in order for a lower deck to support a deck on the same. In a known manner the movable deck sections are lifted up in the sky for carrying cargo, see Figs 16B and 16C or is resting on a fixed deck section (14A), See Fig 16A for example.

The principal object of the present invention is thus, inter alia, to solve the aforementioned problem and find an arrangement which permits the handling of cargo in ships regardless of its weight and size, including on hoistable vehicle decks. It shall also be possible in this respect to accommodate cargo of varying kinds, i.e. with regard to its size and weight.

The aforementioned object is achieved by means of an arrangement in accordance with the present invention, which is characterized essentially in that pairs or a multiplicity of hoistable deck sections are so arranged as to be accommodated packed together in a close manner with one deck section resting on the subjacent hoistable deck section, whereby the aforementioned tightly packed deck sections interact with one another and in so doing increase the strength and reduce the bending flexure of the common deck unit formed in this way.

The invention is described below with reference to the accompanying drawings, in which
Fig. 1 shows a cutaway view of a ship of a previously disclosed kind with the facility for loading and unloading vehicles in the entire internal cargo space of the ship;

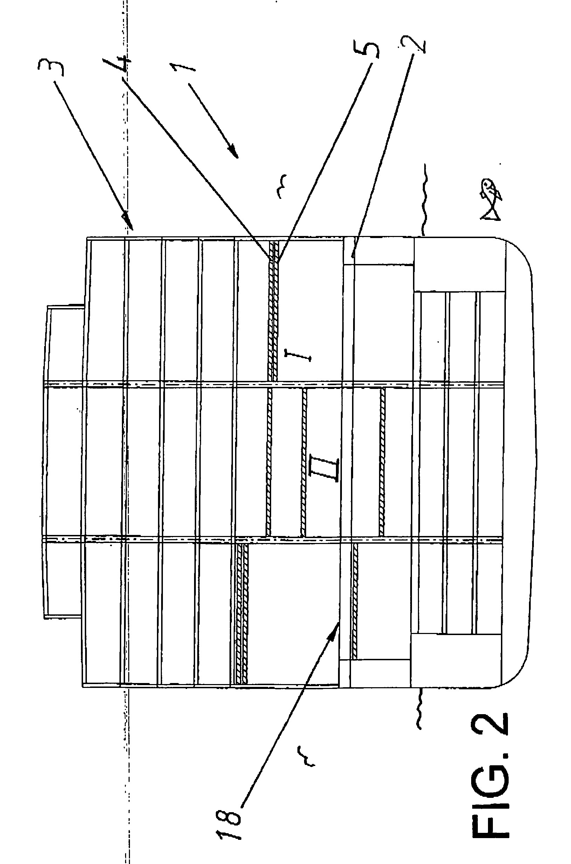

Fig. 2 shows a schematic sectioned view of a ship with hoistable cargo deck sections in accordance with the present invention.

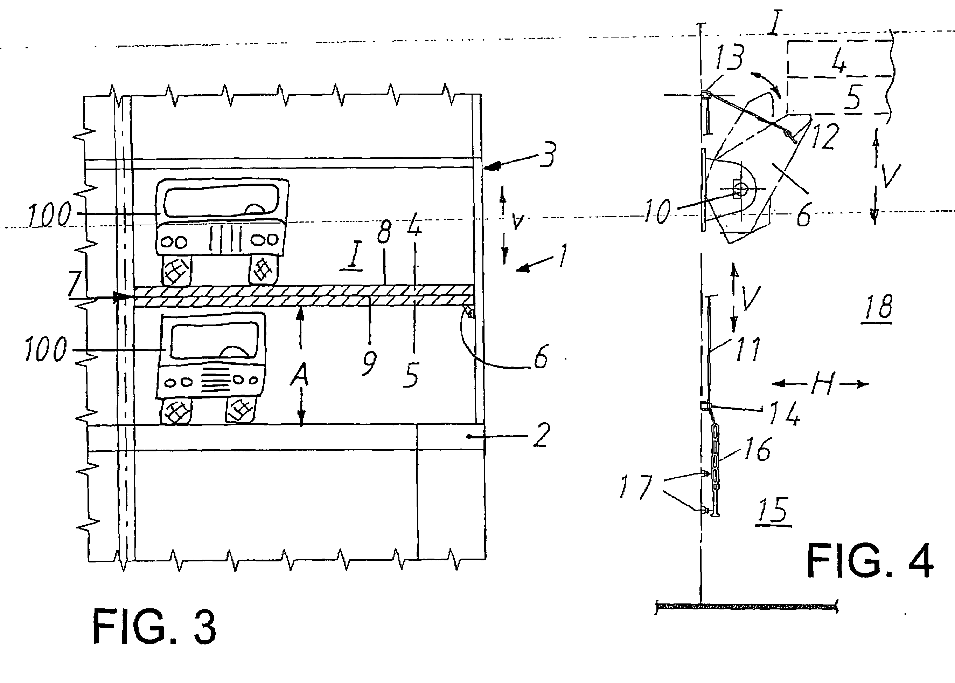

Fig. 3 shows a part of a cargo deck with hoistable deck sections packed together for the purpose in a position in which they are ready to receive cargo; and
Fig. 4 shows locking means for the aforementioned hoistable deck sections included in the arrangement.

An arrangement 1 in accordance with the present invention for cargo decks 2 for ships 3 comprising a number of vertically hoistable deck sections 4,5, which are so arranged as to be capable of being locked respectively in a position II in which they are vertically moved apart and in a position I in which they are vertically moved together by means of locking devices 6 with the ability to be disengaged, has the pairs of hoistable deck sections 4,5 so arranged as to be capable of being accommodated in a packed cargo position I close to each other. More specifically, the aforementioned hoistable deck sections 4,5 are so arranged as to be capable of being accommodated with one deck section 4 resting directly against the subjacent hoistable deck section 5. In this way, the aforementioned close to each other packed deck sections 4,5 are so.arranged as to interact with one another as a common unit for taking up the cargo and, in so doing, increasing the strength and reducing the bending flexure of the common deck unit 7 formed in this way. The aforementioned double deck unit 7 is situated at a distance A from subjacent fixed vehicle cargo decks 2 in order to facilitate the parking of vehicles 100 and/or other cargo thereon beneath the aforementioned double deck unit 7.

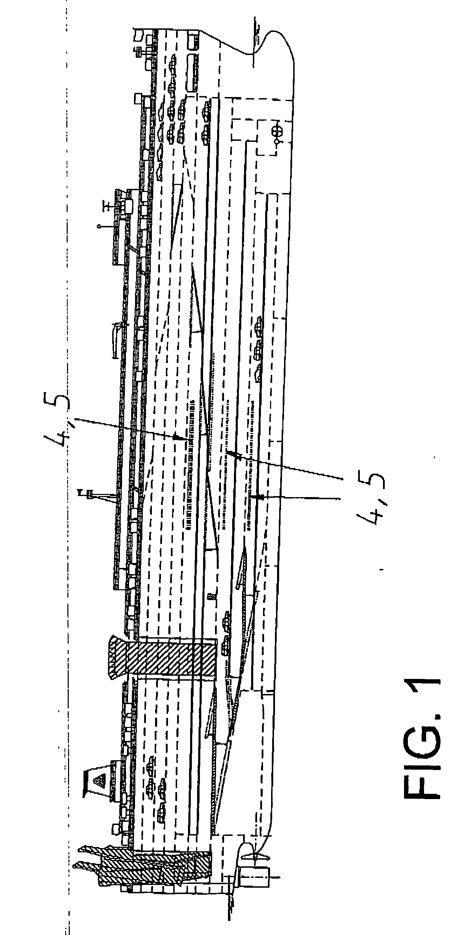

Illustrated by arrows in Fig. 1 are different ramps and decks in and respectively on the ship, and broken lines are used in the middle area of the ship to show how hoistable vehicle decks can be arranged.

The packed and mutually interacting deck sections 4,5, which consist of at least two pieces, are in contact with one another in the intended assembled position I, i.e. one on top of the other one at a time at a mutual distance from one another viewed in the horizontal direction H, in conjunction with which the upper deck section 4 is supported on the subjacent deck section 5, for example on half of its beam span, or the upper deck section 4 is supported closely against the subjacent deck section 5 along the whole of its beam span.

Close to each other packed deck sections 4,5 are so arranged as to be capable of being connected to one another permanently or detachably, for example by welding, riveting, gluing, with bolted joints or with detachable fixing joints of a kind other than bolts. The aforementioned joints are not shown in the drawings, however.

Each of the aforementioned hoistable deck sections 4,5, which are hoistable by means of cables (also not shown here) and/or a number of jacks, and which are lockable vertically V by means of remotely operated locking devices 6 in the form of stops capable of lateral displacement, can be so arranged as to exhibit its own top plate 8,9. In this case, the deck section 4, which is situated at the top of the stack of the aforementioned mutually interacting deck sections 4,5, preferably exhibits thicker plate than exhibited by the one or more subjacent deck section or deck sections. In this case, the aforementioned deck sections can be formed by beams with connecting plates, and of which at least the plates can consist of aluminium. It is also possible to cause the dimensions of the secondary beams, which support the plate on an upper deck section, to be increased in relation to the secondary beams of the other subjacent deck sections.

Locking devices 6 can preferably be formed from stop heels pivotally mounted about an articulation 10, which heels are attached to cables 11 which run from an attachment 12 on the aforementioned stop heel 6 and around guides 13,14 to the intended operating point 15 at a distance from the aforementioned stop heels 6. Cables are connected by means of attachment devices 16 to attachments 17 on the side of the intended cargo space 18 and the movement path of the cargo deck section.

Through the interaction of two or more vehicle deck sections 4,5 with one another, the strength of the vehicle deck 2 can be increased and the bending flexure can be reduced in this way. That is to say, the bearing capacity of the vehicle deck sections is increased if they interact. Interaction is achieved by causing a number of points along the upper and lower structural beams to be in close contact with one another. In the event of loading of the upper section 4, the subjacent section 5 thus also obtains support along the entire vehicle deck area.

The degree of interaction is determined by the intensity of the contact of the sections 4,5 with one another and the relative rigidity of the sections 4,5. Let us assume that the upper section 4 will be subjected to an essentially distributed load, and that the subjacent section 5 provides support only on half of the beam span, and that the sections 4,5 have the same relative rigidity. 25% of the total moment will then be absorbed by section 4, and the remaining 75% by section 5. If the structural beams lie close to one another along the entire span, a doubled bearing capacity will be obtained in the case of equally large structural beams in both sections 4,5. The more the points of contact, the greater the transfer of support as a rule.

Total interaction of two or more vehicle deck sections is obtained, as mentioned above, if they are attached to.one another along the structural beams by welding, riveting, bolting or locking by some other means. In this case, the construction forms a unit of the kind encountered in a sandwich construction. The consequence of this would be for a new structural beam to have been created with changed cross-sectional values for the moment of resistance and the moment of inertia. The total bearing capacity of such a construction would be further increased in relation to the above-mentioned detachable interaction. The ability to have such a construction executed in aluminium would significantly reduce the total weight of the formed vehicle deck.

## Claims

1. Arrangement (1) for cargo decks (2) for vehicles (100) on ships (3) comprising a number of hoistable deck sections (4,5) that are so arranged as to be locked respectively in a position in which they are vertically moved apart and in a position in which they are vertically moved together by means of locking devices (6) with the ability to be disengaged, ***characterized in that*** pairs or a multiplicity of hoistable deck sections (4,5) are so arranged as to be accommodated packed together in a close manner with one deck section (4) resting on the subjacent hoistable deck section (5), whereby the aforementioned tightly packed deck sections (4,5) interact with one another and in so doing increase the strength and reduce the bending flexure of the common deck unit (7) formed in this way.

2. Arrangement in accordance with Patent Claim 1, ***characterized in that*** the packed and mutually interacting deck sections (4,5), which consist of at least two pieces, are in contact with one another one in the intended assembled position (I), i.e. one on top of the other one at a time at a mutual distance from one another viewed in the horizontal direction (H), in conjunction with which the upper deck section (4) is supported on the subjacent deck section (5).

3. Arrangement in accordance with Patent Claim 2, ***characterized in that*** the upper deck section (4) is supported on the subjacent deck section (5) on half of its beam span.

4. Arrangement in accordance with Patent Claim 1, ***characterized in that*** the upper deck section (4) is supported in a close manner on the subjacent deck section (5) along the whole of its beam span.

5. Arrangement in accordance with one of the foregoing Patent Claims, ***characterized in that*** tightly packed upper and lower deck sections (4,5) are connected to one another permanently.

6. Arrangement in accordance with one of the foregoing Patent Claim 5, ***characterized in that*** said permanent connection comprises welding, riveting and gluing.

7. Arrangement in accordance with one of Claims 1-4, ***characterized in that*** said tightly packed deck sections (4,5) are detachably connected to one another.

8. Arrangement in accordance with Claim 7, ***characterized in that*** said detachable connection comprises bolts.

9. Arrangement in accordance with one of Claims 1-4, ***characterized in that*** each of the aforementioned hoistable deck sections (4,5) exhibits its own top plate (8,9), and **in that** the deck section (4) which is situated at the top of the stack of the aforementioned mutually interacting deck sections (4,5) exhibits thicker plate (8) than the plate (9) of the subjacent deck section (5).

10. Arrangement in accordance with one of Claims 1-4, ***characterized in that*** the deck sections (4,5) are formed by beams with connecting plates (8,9).

11. Arrangement in accordance with Patent Claim 10, ***characterized in that*** at least the plates (8,9) consist of aluminium.

12. Arrangement in accordance with one of Claims 1-4, ***characterized in that*** the deck sections (4,5) are hoistable by means of cables (11) and/or a number of jacks and are lockable vertically (V) by means of remotely operated locking devices (6) in the form of stops capable of lateral (H) displacement.

13. Arrangement in accordance with Claim 12, ***characterized in that*** the aforementioned locking devices (6) are formed from stop heels (6) which are pivotally mounted attached to cables (11) running down to the intended operating point (15) at a distance from the aforementioned stop heels (6).

## Patentansprüche

1. Anordnung (1) für Frachtdecks (2) für Fahrzeuge (100) auf Schiffen (3), mit einer Anzahl von anhebbaren Deckabschnitten (4, 5), die derart angeordnet sind, dass sie jeweils in einer Position, in der sie vertikal voneinander weg bewegt sind, und in einer Position, in der sie vertikal zueinander bewegt sind, mittels Verriegelungsvorrichtungen (6) mit der Fähigkeit zum Entkuppeln verriegelt werden können,
**dadurch gekennzeichnet, dass**
Paare oder eine Mehrheit von anhebbaren Deckabschnitten (4, 5) derart angeordnet sind, dass sie gemeinsam gepackt in einer engen Art und Weise untergebracht werden können, wobei ein Deckabschnitt (4) auf dem darunterliegenden anhebbaren Deckabschnitt (5) ruht, wobei die dicht gepackten Deckabschnitte (4, 5) miteinander in Wechselwirkung stehen und dabei die Festigkeit erhöhen und die Durchbiegung der auf diese Weise gebildeten gemeinsamen Deckeinheit (7) reduzieren.

2. Anordnung nach Anspruch 1,
**dadurch gekennzeichnet, dass**
die gepackten und gegenseitig in Wechselwirkung stehenden Deckabschnitte (4, 5), die aus zumindest zwei Teilen bestehen, einer in der beabsichtigten zusammengebauten Position (I), d.h. einer auf dem anderen zu einer Zeit, in einem gegenseitigen Abstand voneinander betrachtet in der horizontalen Richtung (H) in Kontakt miteinander stehen, in Verbindung mit dem der obere Deckabschnitt (4) auf dem darunterliegenden Deckabschnitt (5) gelagert ist.

3. Anordnung nach Anspruch 2,
**dadurch gekennzeichnet, dass** der obere Deckabschnitt (4) auf dem darunterliegenden Deckabschnitt (5) auf der Hälfte seiner Trägerspanne gelagert ist.

4. Anordnung nach Anspruch 1,
**dadurch gekennzeichnet, dass**
der obere Deckabschnitt (4) in einer engen Weise auf dem darunterliegenden Deckabschnitt (5) entlang seiner gesamten Trägerspanne gelagert ist.

5. Anordnung nach einem der vorhergehenden Ansprüche,
**dadurch gekennzeichnet, dass**
die dicht gepackten oberen und unteren Deckabschnitte (4, 5) dauerhaft miteinander verbunden sind.

6. Anordnung nach Anspruch 5,
**dadurch gekennzeichnet, dass**
die dauerhafte Verbindung Schweißen, Nieten und Kleben umfasst.

7. Anordnung nach einem der Ansprüche 1 bis 4,
**dadurch gekennzeichnet, dass**
die dicht gepackten Deckabschnitte (4, 5) lösbar miteinander verbunden sind.

8. Anordnung nach Anspruch 7,
**dadurch gekennzeichnet, dass** die lösbare Verbindung Bolzen umfasst.

9. Anordnung nach einem der Ansprüche 1 bis 4,
**dadurch gekennzeichnet, dass**
jeder der anhebbaren Deckabschnitte (4, 5) seine eigene obere Platte (8, 9) aufweist, und dass der Deckabschnitt (4), der oben auf dem Stapel der gegenseitig in Wechselwirkung stehenden Deckabschnitte (4, 5) angeordnet ist, eine dickere Platte (8) besitzt, als die Platte (9) des darunterliegenden Deckabschnittes (5).

10. Anordnung nach einem der Ansprüche 1 bis 4,
**dadurch gekennzeichnet, dass**
die Deckabschnitte (4, 5) durch Träger mit Verbindungsplatten (8, 9) gebildet sind.

11. Anordnung nach Anspruch 10,
**dadurch gekennzeichnet, dass**
zumindest die Platten (8, 9) aus Aluminium bestehen.

12. Anordnung nach einem der Ansprüche 1 bis 4,
**dadurch gekennzeichnet, dass**
die Deckabschnitte (4, 5) mittels von Seilen (11) und/oder einer Anzahl von Hebern anhebbar sind und mittels entfernt betätigter Verriegelungsvorrichtungen (6) in der Form von Feststellvorrichtungen, die zu einer seitlichen (H) Verstellung in der Lage sind, vertikal (V) verriegelbar sind.

13. Anordnung nach Anspruch 12,
**dadurch gekennzeichnet, dass**
die Verriegelungsvorrichtungen (6) aus Feststellanschlägen (6) gebildet sind, die schwenkbar montiert und an Seilen (11) angebracht sind, die zu dem beabsichtigten Betriebspunkt (15) unter eine Abstand von den Feststelleinrichtungen (6) entlang laufen.

## Revendications

1. Agencement (1) pour des ponts de chargement (2) destinés à des véhicules (100) sur des navires (3) comprenant un certain nombre de tronçons de pont (4, 5) grutables qui sont agencés de manière à être respectivement bloqués dans une position dans laquelle ils sont déplacés verticalement en écartement et dans une position dans laquelle ils sont déplacés verticalement ensemble au moyen de dispositifs de blocage (6) avec la capacité d'être dégagés, **caractérisé en ce que** des paires d'une multiplicité de tronçons de pont grutables (4, 5) sont agencées de manière à être reçues groupées ensemble d'une manière intime avec un tronçon de pont (4) reposant sur le tronçon de pont grutable (4) adjacent inférieur, grâce à quoi les tronçons de pont groupés étroitement précités (4, 5) coopèrent les uns avec les autres et augmentent de ce fait à résistance et réduisent la flexion en cintrage de l'unité de pont commune (7) formée de cette manière.

2. Agencement selon la revendication 1, **caractérisé en ce que** les tronçons de pont groupés et en coopération mutuelle (4, 5), qui sont constitués d'au moins deux pièces, sont en contact l'un avec un autre dans la position assemblée prévue (I), c'est-à-dire l'un sur le dessus de l'autre à la fois à une distance mutuelle l'un de l'autre vus dans la direction horizontale (H), en combinaison de quoi le tronçon de pont supérieur (4) est supporté sur le tronçon de pont (5) adjacent inférieur.

3. Agencement selon la revendication 2,
**caractérisé en ce que** le tronçon de pont supérieur (4) est supporté sur le tronçon de pont (5) adjacent inférieur sur la moitié de la portée de sa poutre.

4. Agencement selon la revendication 1, **caractérisé en ce que** le tronçon de pont supérieur (4) est supporté d'une manière intime sur le tronçon de pont (5) adjacent inférieur le long de la totalité de la portée de sa poutre.

5. Agencement selon l'une des revendications précédentes, **caractérisé en ce que** les tronçons de pont supérieur et inférieur (4, 5) étroitement groupés sont reliés l'un à l'autre de façon permanente.

6. Agencement selon la revendication précédente 5, **caractérisé en ce que** ladite liaison permanente comprend le soudage, le rivetage et le collage.

7. Agencement selon l'une des revendications 1 à 4, **caractérisé en ce que** lesdits tronçons de pont étroitement groupés (4, 5) sont reliés de façon détachable les uns aux autres.

8. Agencement selon la revendication 7, **caractérisé en ce que** ladite liaison détachable comprend des boulons.

9. Agencement selon l'une des revendications 1 à 4, **caractérisé en ce que** chacun des tronçons de pont grutables précités (4, 5) comporte sa propre plaque supérieure (8, 9), et **en ce que** le tronçon de pont (4) qui est situé au sommet de la pile des tronçons de pont mutuellement coopérants précités (4, 5) comporte une plaque plus épaisse (8) que la plaque (9) du tronçon de pont (5) adjacent inférieur.

10. Agencement selon l'une des revendications 1 à 4, **caractérisé en ce que** les tronçons de pont (4, 5) sont formés par des poutres avec des plaques de liaison (8, 9).

11. Agencement selon la revendication 10, **caractérisé en ce que** les plaques au moins (8, 9) sont constituées en aluminium.

12. Agencement selon l'une des revendications 1 à 4, **caractérisé en ce que** les tronçons de pont (4, 5) sont grutables au moyen de câbles (11) et/ou d'un certain nombre de vérins et sont susceptibles d'être bloqués verticalement (V) au moyen de dispositifs de blocage (6) actionnés à distance sous la forme d'arrêts capables de déplacement latéral (H).

13. Agencement selon la revendication 12, **caractérisé en ce que** les dispositifs de blocage précités (6) sont formés par des talons d'arrêt (6) qui sont montés en pivotement attachés à des câbles (11) qui descendent vers le point de fonctionnement prévu (15) à une distance depuis les talons d'arrêt précités (6).
